# EUROPÄISCHE PATENTANMELDUNG

(11) **EP 1 191 766 A2**
(43) Veröffentlichungstag der Anmeldung: **27.03.2002**
(21) Anmeldenummer: 01120266.0
(22) Anmeldetag: 23.08.2001
(51) Int. Cl.: H04L 29/08, H04L 29/06, H04L 12/66

(54) **Rechner und Verfahren zum Bereitstellen von verteilten dynamischen Diensten für mobile Endgeräte**

(30) Priorität: 13.09.2000 DE 10045248
(71) Anmelder: SIEMENS AKTIENGESELLSCHAFT, 80333 München (DE)
(72) Erfinder: Gitsels, Martin, Dr., 81737 München (DE); Sauter, Jochen, 80336 München (DE)

(57) **Zusammenfassung**

Eine Anforderungs-Nachricht, die in einer Markierungs-Sprache codiert ist, wird decodiert und die gespeicherten Dienstparameter werden ausgewählt, die dem in der Anforderungs-Nachricht angeforderten verteilten dynamischen Dienst zugeordnet sind. Die ausgewählten Dienstparameter werden in der Markierungs-Sprache an ein Endgerät übertragen und den Dienstparametern werden Parameterwerte zugeordnet und zu dem Rechner übertragen. Die Parameterwerte werden zu einem Dienste-Server übertragen der angeforderte Dienst wird gemäß den Parameterwerten durchgeführt. Das Ergebnis der Durchführung, beispielsweise eine Meldung an den Benutzer, wird von dem Rechner in die Markierungssprache übertragen und an das Endgerät weitergeleitet.

## Beschreibung

Die Erfindung betrifft einen Rechner sowie ein Verfahren zum rechnergestützten Bereitstellen von verteilten dynamischen Diensten für mobile Endgeräte, insbesondere für kleine mobile Endgeräte.

Ein solcher Rechner und ein solches Verfahren sind bekannt, wobei es bei einem solchen Rechner zum Bereitstellen von verteilten dynamischen Diensten in einem Rechnernetz vorgesehen ist, eine Java Virtual Machine (JVM) auf dem entsprechenden Rechner zu installieren.

Unter verteilten dynamischen Diensten sind im Rahmen dieser Erfindung beispielsweise Dienste zu verstehen, mit denen ein Endgerät einen vorgegebenen Dienst eines Dienste-Servers spontan, d.h. ohne Vorkonfiguration, in Anspruch nehmen kann.

Zur Verwaltung von dynamischen Diensten in Netzwerken existieren verschiedene Technologien. Ein Beispiel für eine solche Technologie zum Management verteilter dynamischer Dienste ist Jini, welches aus [1] bekannt sind.

Weitere ähnliche Technologien sind Universal Plug and Play (vgl. [2]) sowie Chai (vgl. [3]).

Gemäß dem aus [1] bekannten Konzept melden sich Dienste-Server, die einen Jini-Dienst für ein Kommunikationsendgerät zur Verfügung stellen wollen, bei einem sogenannten Jini-Lookup-Service an.

Gemäß dem Jini-Protokoll fragt ein Jini-Client von dem Jini-Lookup-Service eine Liste von in dem Rechnernetz zur Verfügung stehenden Jini-Diensten an.

Eine Liste von zur Verfügung stehenden Diensten werden von dem Jini-Lookup-Service als Dienste-Nachricht an den Jini-Client übermittelt.

Jedem Jini-Dienst sind Diensteparameter zugeordnet, beispielsweise verschiedene Attribute, die den jeweiligen Dienst charakterisieren, wie beispielsweise der Name des Dienstes, nähere Information über den Dienst oder auch die Adresse des Dienste-Servers innerhalb des Rechnernetzes. Als weiteres Attribut kann beispielsweise eine Seite in einer Markup Language beispielsweise der Hypertext Markup Language (HTML) oder der Wireless Markup Language (WML) als Diensteparameter dem Jini-Lookup-Service zur Verfügung gestellt werden.

Weiterhin ist im Jini-Lookup-Service für jeden registrierten Dienst ein sogenannter Dienst-Proxy als eigenständiges Programm, das eine eigene Kommunikation unmittelbar mit dem Jini-Dienste-Server durchführen kann, gespeichert.

Wählt der Jini-Client einen Dienst aus, so übersendet der Jini-Lookup-Service dem Jini-Client den Service-Proxy, der von dem Jini-Client gespeichert wird.

Unter Verwendung des Jini-Proxys wird üblicherweise von dem Jini-Client eine Kommunikation mit dem Jini-Dienste-Server aufgebaut und der gewünschte Dienst wird von dem Jini-Client beantragt und üblicherweise von dem Jini-Dienste-Server bereitgestellt.

Der Jini-Client ist üblicherweise unter Verwendung der Java Virtual Machine und der Jini-Software in dem Rechner des Benutzers implementiert.

Nachteilig an dieser Vorgehensweise ist, dass ein erheblicher Rechenzeitbedarf zur Benutzung des Jini-Dienstes auf dem jeweiligen Client-Rechner erforderlich ist. Insbesondere muss auch eine Java Virtual Machine gemäss der Java2-Spezifikation (vgl. [4]) auf dem jeweiligen Client-Rechner installiert sein.

Insbesondere bei Rechnern mit geringer Rechenkapazität, beispielsweise einem mobilen Kommunikationsendgerät wie einem Mobilfunktelefon oder einem PDA (**P**ersonal **D**igital **A**ssistant) ist es bisher nicht möglich, Jini-Dienste in Anspruch zu nehmen, da für solche Kommunikationsendgeräte bisher keine Java Virtual Machine gemäss der Java2-Spezifikation existiert.

Diese Problematik wird weiter dadurch erschwert, dass aufgrund von Mobilfunkverbindungen, die eine geringe Datenrate zur Verfügung stellen, ein Durchführen von Jini-Diensten ohne Verwendung des Wireless Application Protocols (WAP) nicht praktikabel ist.

Somit liegt der Erfindung das Problem zugrunde, verteilte dynamische Dienste in einem Rechnernetz mit geringer Bandbreite bereitzustellen, selbst für Rechner mit geringer zur Verfügung stehender Rechenkapazität.

Das Problem wird durch den Rechner sowie durch das Verfahren zum Bereitstellen von verteilten dynamischen Diensten in einem Rechnernetz mit den Merkmalen gemäß den unabhängigen Patentansprüchen gelöst.

Ein Rechner zum Bereitstellen von verteilten dynamischen Diensten in einem Rechnernetz, insbesondere zum Bereitstellen von Jini-Diensten, hat Dienstparameter gespeichert, die den in dem Rechner zur Verfügung stehenden verteilten dynamischen Diensten zugeordnet sind. Der Rechner weist eine Markierungs-Sprachen-Codier-/Decodiereinheit auf, mit der Nachrichten einer Markierungs-Sprache codierbar und decodierbar sind.

Weiterhin ist in dem Rechner eine Dienst-Ermittlungseinheit vorgesehen, mit der aufgrund der empfangenen codierten Anforderungsnachricht, die in einer Markierungs-Sprache codiert ist, gespeicherte Dienstparameter ausgewählt werden, die dem in der Anforderungs-Nachricht angeforderten verteilten dynamischen Dienste zugeordnet sind.

Mit einer in dem Rechner weiterhin vorgesehenen Dienst-Protokoll-Codier-/Decodiereinheit ist es möglich, gemäß einem Dienst-Protokoll, insbesondere dem Jini-Protokoll, gemäß dem verteilte dynamische Dienste verarbeitbar sind, zu codieren und zu decodieren.

Die Markierungs-Sprachen-Codier-/Decodiereinheit ist derart eingerichtet, dass die von der Dienstparameter-Ermittlungseinheit ausgewählten Dienstparameter in der entsprechenden Markierungs-Sprache codiert werden können.

Ferner können Parameterwerte, die den Dienstparametern in einer Antwortnachricht dem Rechner zugeführt worden sind und die den jeweiligen Dienst in seiner Anforderung näher beschreiben, von der Dienst-Protokoll-Codier-/Decodiereinheit gemäß dem Dienst-Protokoll codiert werden.

Weiterhin weist der Rechner eine Dienste-Rechner-Ermittlungseinheit auf, mit der in dem Rechnernetz diejenigen weiteren Rechner ermittelt werden, die einen oder mehrere Dienste gemäß dem Dienst-Protokoll, vorzugsweise gemäß dem Jini-Protokoll, bereitstellen.

Die Dienste-Rechner-Ermittlungseinheit kann bevorzugt als Jini-Lookup-Service implementiert sein.

Bei dem Jini-Lookup-Service können sich Jini-Dienste direkt anmelden, um dadurch eine direkte Kommunikation zwischen der Dienste-Ermittlungseinheit und dem Jini-Lookup-Service zu ermöglichen.

Bei einem Verfahren zum rechnergestützten Bereitstellen von verteilten dynamischen Diensten in einem Rechnernetz, wobei in einem Rechner Dienstparameter gespeichert sind, die in dem Rechnernetz zur Verfügung stehenden verteilten dynamischen Diensten zugeordnet sind, wird von dem Rechner eine Anforderungs-Nachricht, die in einer Markierungs-Sprache codiert ist, empfangen und decodiert. Abhängig von dem Dienst, der mit der Anforderungs-Nachricht ausgewählt wird, werden die gespeicherten Dienstparameter ausgewählt, die dem angeforderten verteilten dynamischen Dienst zugeordnet sind. Die ausgewählten Dienstparameter werden zu einer Dienstparameter-Nachricht gemäß der Markierungs-Sprache codiert und an ein Kommunikationsendgerät übertragen.

Beispielsweise von dem Benutzer des Kommunikationsendgerätes werden dem Dienst Parameterwerte zugeordnet. Die Parameterwerte werden zu einer Werte-Nachricht in der Markierungs-Sprache codiert und zu dem Rechner übertragen. Nach erfolgter Decodierung der Werte-Nachricht werden von dem Rechner aufgrund der Parameterwerte und des angeforderten Dienstes eine Dienstanforderungs-Nachricht gemäß einem Dienstprotokoll, gemäß dem verteilte dynamische Dienste verarbeitbar sind, mit den entsprechenden Parameterwerten zu dem Dienste-Server übertragen und der angeforderte Dienst wird von dem Dienste-Server gemäß den zuvor bestimmten Parameterwerten erbracht. Die jeweiligen Dienst-Server werden von dem Rechner, vorzugsweise unter Verwendung eines Jini-Lookup-Service, ermittelt und gespeichert.

Anschaulich kann die Erfindung darin gesehen werden, dass es nunmehr nicht mehr erforderlich ist, in einem Rechner mit geringer Rechenkapazität, beispielsweise einem Kommunikationsendgerät, insbesondere einem mobilen Kommunikationsendgerät wie einem Mobilfunktelefon oder einem PDA Software-Module zu implementieren, die das Jini-Protokoll direkt implementieren.

Das mobile Kommunikationsendgerät, allgemein der Rechner mit geringer Rechenkapazität, kann gemäß einem üblichen Internet-Protokoll, beispielsweise dem Hypertext Transfer Protocol (HTTP) oder dem Wireless Application Protocol (WAP)eine Kommunikation mit einem Protokoll-Umsetzungsrechner, dem erfindungsgemäßen Rechner, durchführen.

In dem Rechner erfolgt die Umsetzung des Internet-Protokolls in das Jini-Protokoll, wodurch die für das Kommunikationsendgerät "transparente" Zwischenschaltung des Rechners ermöglicht ist.

Durch die Erfindung wird es nunmehr erstmals möglich, Jini-Dienste auf einfache Weise auch von einem Rechner mit einer geringen Rechenleistung aufzufinden und in Anspruch zu nehmen, beispielsweise auf einem mobilen Kommunikationsendgerät wie einem Mobilfunktelefon oder einem PDA.

Bevorzugte Weiterbildungen der Erfindung ergeben sich aus den abhängigen Ansprüchen.

Die Markierungs-Sprachen-Codier-/Decodiereinheit kann derart eingerichtet sein, dass Nachrichten in der Markierungs-Sprache Hypertext Markup Language (HTML) und/oder in der Markierungs-Sprache Wireless Markup Language (WML) codierbar und decodierbar sind.

Weiterhin kann die Dienst-Protokoll-Codier-/Decodiereinheit derart eingerichtet sein, dass Nachrichten gemäß dem Dienst-Protokoll Jini, gemäß dem verteilte dynamische Dienste verarbeitbar sind, codierbar und decodierbar sind.

Zu Beginn oder während des Bereitstellens ist es gemäß einer Weiterbildung der Erfindung vorgesehen, dass beispielsweise mittels einer Dienste-Ermittlungseinheit, die in dem Rechnernetz zur Verfügung stehenden oder neu zur Verfügung stehenden verteilten dynamischen Dienste ermittelt werden können und mit den jeweils ihnen zugeordneten Dienstparametern von dem Rechner ermittelt und gespeichert werden können.

Die Dienste-Ermittlungseinheit und/oder die Dienste-Protokoll-Codier-/Decodiereinheit kann als Java-Servlet eingerichtet sein.

Ein Ausführungsbeispiel der Erfindung ist in den Figuren dargestellt und wird im weiteren näher erläutert.

Es zeigen
- Figur 1: ein Blockdiagramm, in dem die allgemeine Architektur eines Kommunikationssystems gemäß einem Ausführungsbeispiel der Erfindung dargestellt ist;
- Figur 2: ein Blockdiagramm, in dem einzelne Nachrichten zum Ermitteln von Jini-Diensten gemäß einem Ausführungsbeispiel der Erfindung dargestellt sind;
- Figur 3: ein Blockdiagramm, in dem das Auswählen und Nutzen von Jini-Diensten gemäß einem Ausführungsbeispiel der Erfindung dargestellt ist.

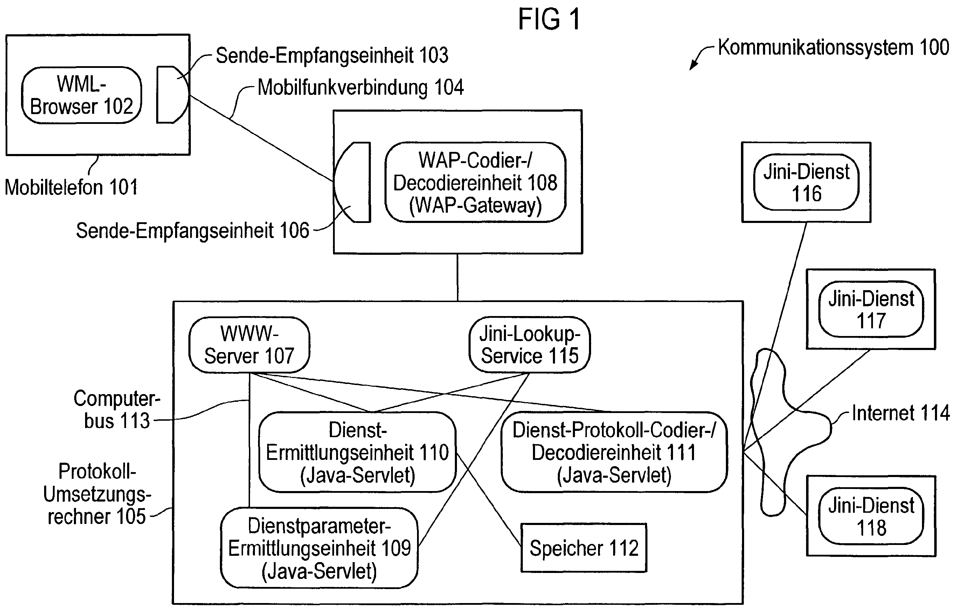

**Fig.1** zeigt ein Kommunikationssystem 100 mit einem Mobilfunktelefon 101, einem Protokoll-Umsetzungsrechner 105, einer WAP-Codier-/Decodiereinheit 108 und mit n Dienste-Servern, einem ersten Jini-Server 116, einem zweiten Jini-Server 117 und einem n-ten Jini-Server 118.

Das Mobilfunktelefon 101 ist über eine Mobilfunkverbindung 104, beispielsweise verwendend GSM, CDMA oder UMTS über die WAP-Codier-/Decodiereinheit 108 mit dem Protokoll-Umsetzungsrechner 105 gekoppelt.

Der Protokoll-Umsetzungsrechner 105 ist mit den Jini-Servern 116, 117, 118 mittels eines Kommunikationsnetzes, gemäß dem Ausführungsbeispiel dem Internet 114 gekoppelt.

Dies bedeutet, dass die Kommunikation zwischen dem Mobilfunktelefon 101 und dem Protokoll-Umsetzungsrechner 105 gemäß dem Wireless Application Protocol (WAP) auf Anwendungsschicht-Protokollebene über die WAP-Codier-/Decodiereinheit 108 und gemäß dem jeweiligen Mobilfunk-Protokoll gemäß dem jeweils eingesetzten Mobilfunk-Standard abläuft.

Die Kommunikation zwischen dem Protokoll-Umsetzungsrechner 105 und den Jini-Servern 116, 117, 118 erfolgt auf Anwendungsschicht-Protokollebene gemäß dem Jini-Protokoll, wie es in [1] beschrieben ist und auf der Ebene der Transportschicht bzw. der Vermittlungsschicht gemäß den Internet-Protokoll Transport Control Protocol (TCP) bzw. Internet-Protocol (IP).

In dem Mobilfunktelefon 101, das einen Prozessor sowie einen Speicher (nicht dargestellt) aufweist, ist ein Wireless Markup Language Browser (WML-Browser) installiert. Mittels des WML-Browsers 102 ist es möglich, von dem Mobilfunktelefon 101 aus Nachrichten gemäß dem WAP-Standard zu senden und empfangene Nachrichten, die Daten gemäß dem WML-Standard enthalten, zu decodieren und einem Benutzer des Mobilfunktelefons 101 darzustellen.

Weiterhin weist das Mobilfunktelefon 101 eine Sende/Empfangseinheit 103 auf, über die eine Kommunikation über die Mobilfunkverbindung 104 über die WAP-Codier-/Decodiereinheit 108 mit dem Protokoll-Umsetzungsrechner 105 erfolgt, das heißt von der Nachrichten zu dem Protokoll-Umsetzungsrechner 105 gesendet und von dem Nachrichten, die von dem Protokoll-Umsetzungsrechner 105 gesendet worden sind, empfangen werden.

Der Protokoll-Umsetzungsrechner 105 weist ebenfalls eine Sende-/Empfangseinheit 106 auf, sowie einen World Wide Web-Server (WWW-Server) 107, über den eine Kommunikation über die WAP-Codier-/Decodiereinheit 108 mit dem WML-Browser 102 des Mobilfunktelefons 101 ermöglicht wird.

Mit der WAP-Codier/Decodiereinheit 108 werden Nachrichten, die zu dem Mobilfunktelefon 101 übertragen werden sollen, gemäß dem WAP-Protokoll codiert und von der Sende/Empfangseinheit des Protokoll-Umsetzungsrechners 105 zu dem Mobilfunktelefon 101 gesendet. Ferner werden von der WAP-Codier-/Decodiereinheit von dem Mobilfunktelefon 101 gesendete Nachrichten decodiert.

Weiterhin ist in dem Protokoll-Umsetzungsrechner 105 eine Dienstparameter-Ermittlungseinheit 109 enthalten, dessen Funktionalität im Rahmen der Beschreibung des Verfahrens im weiteren erläutert wird.

In einer Dienste-Ermittlungseinheit 110 des Protokoll-Umsetzungsrechners 105 werden Jini-Dienste, die in dem Rechnernetz zur Verfügung stehen, ermittelt.

Weiterhin ist eine Dienst-Protokoll-Codier-/Decodiereinheit als Jini-Protokoll-Codier-/Decodiereinheit 111 vorgesehen, die Nachrichten, die von dem Protokoll-Umsetzungsrechner 105 zu dem Jini-Server 116, 117, 118 oder zu dem Jini-Lookup-Service-Rechner 115, der ebenfalls mit dem Internet 114 gekoppelt ist, Nachrichten gemäß dem Jini-Protokoll codiert und sendet. Ferner ist die Dienst-Protokoll-Codier-/Decodiereinheit derart eingerichtet, dass empfangene Nachrichten gemäß dem Jini-Protokoll decodiert werden können.

Weiterhin sind ein Prozessor und ein Speicher in dem Protokoll-Umsetzungsrechner 105 vorgesehen.

Die einzelnen Elemente in dem Protokoll-Umsetzungsrechner 105 sind mittels eines Computerbus 113 miteinander verbunden.

Weiterhin ist es in einer alternativen Ausführungsform der Erfindung vorgesehen, die einzelnen Komponenten gemeinsam in Software in Form eines Computerprogramms zu implementieren, wobei die Funktionalität der jeweiligen Einheit bei Ausführung des Computerprogramms durch den Prozessor des Protokoll-Umsetzungsrechners 105 gewährleistet bleibt.

Die Dienste-Protokoll-Codier-/Decodiereinheit 111 ist gemäß dem vorliegenden Ausführungsbeispiel als sogenanntes Java-Servlet realisiert, das heißt als Java-Softwaremodul, welches direkt mit dem WWW-Server 107 gemäß einem bekannten Protokoll kommuniziert.

Ein Java-Servlet erhält Anforderungsnachrichten gemäß dem Hypertext Transport Protocol (HTTP), verarbeitet diese möglicherweise mit Hilfe von externen Server-Prozessen, beispielsweise einem Datenbankserver, und erzeugt Ergebnisseiten für den Browser des Benutzers, gemäß dem Ausführungsbeispiel für den WML-Browser 102 des Mobilfunktelefons 101.

Das Servlet-Konzept funktioniert gleichermaßen für einen Web-Zugriff über einen herkömmlichen HTML-fähigen Browser, beispielsweise einem Netscape Navigator, als auch für eine Kommunikationsverbindung gemäß dem WAP mittels eines sogenannte Micro-Browsers, der WML als Markierungs-Sprache verwendet.

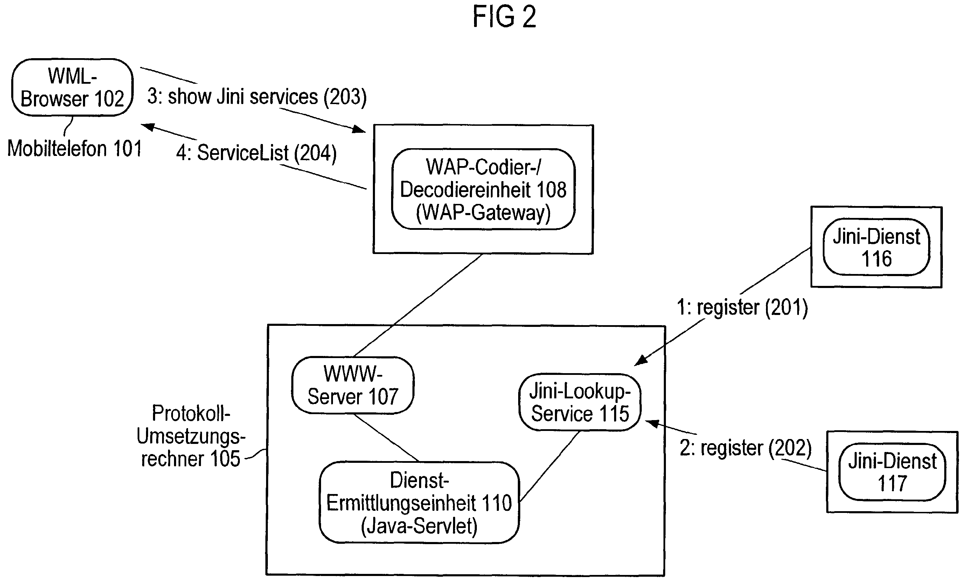

**Fig.2** zeigt die Vorgehensweise gemäß dem Ausführungsbeispiel zum Ermitteln der in dem Rechnernetz, dem Internet 114, zur Verfügung stehenden Jini-Dienste, die von Jini-Servern 116, 117, 118 zur Verfügung gestellt werden.

Bevor ein Benutzer auf Jini-Dienste zugreifen kann, muss er zunächst alle in dem Rechnernetz, insbesondere in dem für ihn erreichbaren Teil des Rechnernetzes, verfügbaren Dienste auffinden.

Dies erfolgt auf die in **Fig.2** dargestellte Weise.

Jeder Jini-Server 116, 117, 118 registriert sich bei einem Lookup-Service 115 mittels einer Registriernachricht, das heißt der erste Jini-Server 116 registriert sich mittels einer ersten Registrier-Nachricht 201 und der zweite Jini-Server 117 registriert sich mittels einer zweiten Registrier-Nachricht 202.

In dem Lookup-Service 115 werden die Registrier-Nachrichten 201, 202 empfangen und gespeichert.

In den Registrier-Nachrichten 201, 202 sind jeweils eine Mehrzahl von Attributen, die den jeweiligen zur Verfügung stehenden Dienst beschreiben, enthalten.

Attribute sind beispielsweise der Name des zur Verfügung stehenden Dienstes, Ortsinformation über den Dienst, oder auch eine URL-Adresse des Jini-Servers 116, 117, 118.

Weiterhin ist gemäß dem Jini-Protokoll in der Registrier-Nachricht ein sogenannter Dienste-Proxy enthalten, das heißt eine Referenz auf das entsprechende Dienste-Objekt, wodurch eine unmittelbare Kommunikation des Nutzers des Dienste-Proxys mit dem Dienste-Service, ohne Zwischenschaltung des Jini-Lookup-Service 115 möglich wird.

Gemäß dem Ausführungsbeispiel ist ein weiteres Attribut, das dem jeweiligen Jini-Dienst zugeordnet ist, eine WML-Seite, die dem jeweiligen Dienst als Dienstparameter zugeordnet ist.

Ist der Jini-Dienst beispielsweise ein Druck-Dienst, der einem Rechner von einem Drucker zur Verfügung gestellt wird, so ist die WML-Seite des entsprechenden Drucker-Dienstes vergleichbar mit einer graphischen Benutzeroberfläche, die beispielsweise bei der Druckoption in einem Textverarbeitungsprogramm enthalten ist, und mittels der durch Zuordnung von Parameterwerten die Anzahl der Ausdrucke, genaue Spezifikation der zu druckenden Seiten, etc. möglich ist.

Die Dienst-Ermittlungseinheit 110 verwendet den Jini-Lookup-Service 115, der auf demselben Rechner vorgesehen ist, d.h. implementiert ist, um eine Liste der dort registrierten Jini-Services zu erstellen. Dies kann entweder auf Anfrage seitens des Clients oder periodisch in festen Zeitabständen geschehen.

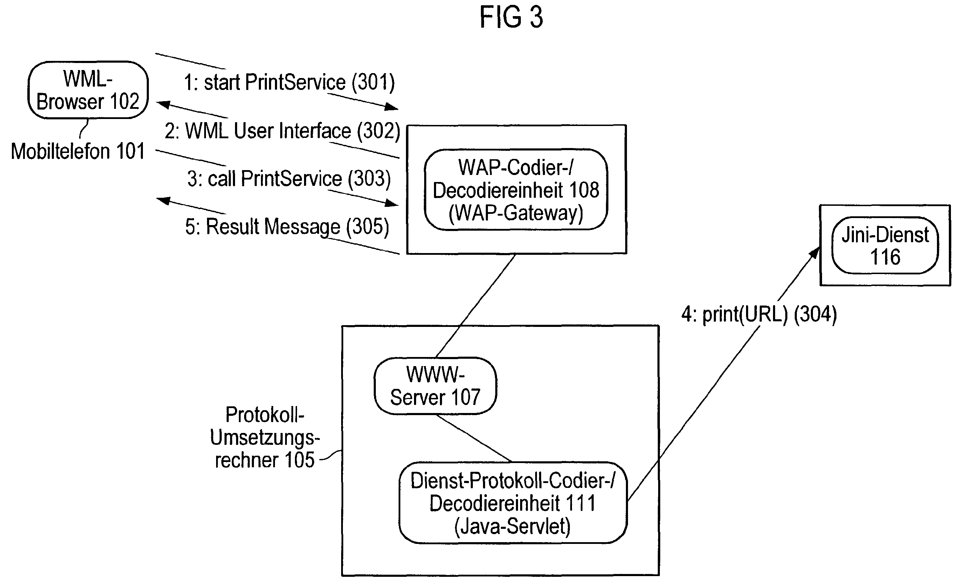

Will nun ein Benutzer des Mobilfunktelefons 101 einen Jini-Dienst in Anspruch nehmen, so ergibt sich der in **Fig.3** dargestellte Ablauf.

Der WML-Browser 102 des Mobilfunktelefons sendet eine Listen-Anforderungs-Nachricht 203, codiert gemäß dem WAP, an den Protokoll-Umsetzungsrechner 105.

Von der Dienst-Ermittlungseinheit 110 werden alle zur Verfügung stehenden Dienste ermittelt, und in einer Listen-Nachricht 204 gemäß dem WAP codiert und dem Mobilfunktelefon 101 übertragen.

Sie können ferner gemäß dem WAP-Protokoll als auswählbare Dienste gemäß der WML auswählbar zur Verfügung gestellt werden.

Alternativ kann das Ermitteln der Liste der zur Verfügung stehenden Jini-Dienste derart erfolgen, dass ein Benutzer des Mobilfunktelefons 101 mittels des WML-Browsers 102 eine Einstiegsseite, die auch als Jini-Portal bezeichnet wird, anfordert.

Alternativ kann die Einstiegsseite auch auf einem allgemeinen Portal eines Intranets eines Unternehmens oder einer Stadt oder einer Region referenziert werden.

Wird nun einer der Hyperlinks, mit dem die Jini-Dienste in der Listen-Nachricht 204 durch den WML-Browser 102 auf dem Display des Mobilfunktelefons 101 dargestellt sind, ausgewählt, wird von dem WML-Browser 102 eine Anforderungs-Nachricht 301 mit der Angabe des angeforderten Dienstes codiert und über die WAP-Codier-/Decodiereinheit 108 zu dem Protokoll-Umsetzungsrechner 105 übertragen.

In dem Protokoll-Umsetzungsrechner 105 erfolgt eine Decodierung der Anforderungs-Nachricht 301 und die Information, das heißt die Angabe über den gewünschten Dienst wird ermittelt.

Unter Verwendung der Dienstparameter-Ermittlungseinheit 109 werden zu dem ermittelten Dienst die entsprechenden, gespeicherten, dem Dienst zugeordneten Dienstparameter, insbesondere die WML-Seite, die dem Dienst zugeordnet ist, ermittelt und als Dienstparameter-Nachricht 302 an das Mobilfunktelefon 101 übertragen, wo die WML-Seite mittels des WML-Browsers 102 auf dessen Display dargestellt wird.

Der Benutzer kann nun die gewünschten Parameterwerte für die auswählbaren und konfigurierbaren Dienstparameter eingeben, bei einem Druckservice beispielsweise den Dateipfad des zu druckenden Dokumentes, die Anzahl der zu druckenden Seiten, oder alternativ eine URL (Uniform Resource Locator) zum Dokument, wenn die Seite über das Internet vor dem eigentlichen Druckvorgang angefordert ermittelt werden soll.

Die eingegebenen Werte werden gemäß dem WAP codiert und als Werte-Nachricht 303 über die WAP-Codier-/Decodiereinheit 108 zu dem Protokoll-Umsetzungsrechner 105 übertragen.

Von der Dienst-Protokoll-Codier-/Decodiereinheit wird nun gemäß dem Jini-Protokoll eine Dienstanforderungs-Nachricht 304 codiert und an den Jini-Server 116, 117, 118, gemäß dem Ausführungsbeispiel an einen Druck-Server, übertragen.

Zur Implementierung wird der jeweilige Dienste-Proxy des Dienstes, der in dem Speicher 112 des Protokoll-Umsetzungsrechners 105 gespeichert ist, verwendet. Nach erfolgtem Ausdruck, das heißt nach erfolgtem Durchführen des angeforderten Druckdienstes gemäß den Parameterwerten, die von dem Benutzer des Mobilfunktelefons 101 vorgegeben sind und auch in der Dienstanforderungs-Nachricht 304 an den Druckserver 116, 117, 118 übertagen worden sind, wird von dem Protokoll-Umsetzungsrechner 105 eine Ergebnis-Nachricht 305 gemäß dem WAP-Format codiert und über die WAP-Codier-/Decodiereinheit 108 zu dem Mobilfunktelefon 101 übertragen.

In der Ergebnis-Nachricht 305 ist entweder die erfolgreiche Durchführung des Dienstes oder eine Fehler-Nachricht enthalten, so dass das Mobilfunktelefon 101 die Information enthält, ob der Dienst ausgeführt werden konnte oder nicht.

Ein beispielhaftes Szenario wird im weiteren kurz angegeben.

Der Benutzer des Mobilfunktelefons hat sich mittels des WAP in dem Internet 114 eine für ihn interessante Seite ermittelt, beispielsweise eine Übersicht über aktuelle Börsenkurse.

Er speichert den Hyperlink, das heißt die URL zu der Seite mit den Börsenkursen, in dem Speicher des Mobilfunktelefons 101.

Gelangt der Benutzer des Mobilfunktelefons 101 nun in die Nähe eines Druckers, der einen Jini-Druckdienst zur Verfügung stellt, kann nun der Benutzer des Mobilfunktelefons 101 auf einfache Weise gemäß der oben beschriebenen Vorgehensweise die gewünschte Internet-Seite von dem Drucker, der als Jini-Druck-Server dient, ausdrucken lassen.

In diesem Dokument sind folgende Dokumente zitiert:
[1] Erhältlich im Internet am 01.08.2000 unter der Adresse:
   http://www.sun.com/jini
[2] Erhältlich im Internet am 01.08.2000 unter der Adresse:
   http://www.upnp.org
[3] Erhältlich im Internet am 01.08.2000 unter der Adresse:
   http://www.internetsolutions.enterprise.hp.com/chai
[4] Erhältlich im Internet am 01.08.2000 unter der Adresse:
   http://java.sun.com/jdk

## Patentansprüche

1. Rechner zum Bereitstellen von verteilten dynamischen Diensten in einem Rechnernetz, wobei in dem Rechner Dienstparameter gespeichert sind, die in dem Rechnernetz zur Verfügung stehenden verteilten dynamischen Diensten zugeordnet sind,
• mit einer Dienst-Ermittlungseinheit, mit der aufgrund einer empfangenen, decodierten Anforderungs-Nachricht, die in einer Markierungs-Sprache codiert ist, gespeicherte Dienstparameter ausgewählt werden, die dem in der Anforderungs-Nachricht angeforderten verteilten dynamischen Dienst zugeordnet ist,
• mit einer Dienst-Protokoll-Codier-/Decodiereinheit, mit der Nachrichten gemäß einem Dienst-Protokoll, gemäß dem verteilte dynamische Dienste verarbeitbar sind, codierbar und decodierbar sind,
• wobei die von der Dienst-Ermittlungseinheit ausgewählten Dienstparameter von einer Markierungs-Sprachen-Codier-/Decodiereinheit in der Markierungs-Sprache codiert werden können,
• wobei decodierte Parameterwerte der Dienstparameter von der Dienst-Protokoll-Codier-/Decodiereinheit gemäß dem Dienst-Protokoll codiert werden können, und
• mit einer Dienste-Rechner-Ermittlungseinheit, mit der in dem Rechnernetz weitere Rechner bestimmt werden, die einen oder mehrere Dienste gemäß dem Dienst-Protokoll bereitstellen.

2. Rechner nach Anspruch 1,
bei dem die Markierungs-Sprachen-Codier-/Decodiereinheit derart eingerichtet ist, dass Nachrichten in der Markierungs-Sprache Hypertext Markup Language und/oder in der Markierungs-Sprache Wireless Markup Language codierbar und decodierbar sind.

3. Rechner nach Anspruch 1 oder 2,
bei dem die Dienst-Protokoll-Codier-/Decodiereinheit derart eingerichtet ist, dass Nachrichten gemäß dem Dienst-Protokoll Jini, gemäß dem verteilte dynamische Dienste verarbeitbar sind, codierbar und decodierbar sind.

4. Rechner nach einem der Ansprüche 1 bis 3,
mit einer Dienste-Ermittlungseinheit, mit der die in dem Rechnernetz zur Verfügung stehenden verteilte dynamische Dienste ermittelt werden können und mit der Dienstparameter, die jeweils einem Dienst zugeordnet sind, ermittelt werden können.

5. Rechner nach einem der Ansprüche 1 bis 4,
bei dem die Dienste-Ermittlungseinheit und/oder die Dienst-Protokoll-Codier-/Decodiereinheit als Java-Servlet eingerichtet ist/sind.

6. Rechner nach einem der Ansprüche 1 bis 5,
bei dem die Dienste-Rechner-Ermittlungseinheit einen Jini-Lookup-Service bereitstellt.

7. Verfahren zum rechnergestützten Bereitstellen von verteilten dynamischen Diensten in einem Rechnernetz, wobei in einem Rechner Dienstparameter gespeichert sind, die in dem Rechnernetz zur Verfügung stehenden verteilten dynamischen Diensten zugeordnet sind,
• bei dem eine Anforderungs-Nachricht, die in einer Markierungs-Sprache codiert ist, empfangen und decodiert wird,
• bei dem die gespeicherten Dienstparameter ausgewählt werden, die dem in der Anforderungs-Nachricht angeforderten verteilten dynamischen Dienst zugeordnet sind,
• bei dem die ausgewählten Dienstparameter als in der Markierungs-Sprache codierte Dienstparameter-Nachricht an ein Kommunikationsendgerät übertragen werden,
• bei dem in dem Kommunikationsendgerät den Dienstparametern Parameterwerte zugeordnet werden,
• bei dem zumindest die Parameterwerte als in der Markierungs-Sprache codierte Werte-Nachricht zu dem Rechner übertragen werden,
• bei dem die Werte-Nachricht decodiert wird,
• bei dem eine Dienstanforderungs-Nachricht gemäß einem Dienst-Protokoll, gemäß dem verteilte dynamische Dienste verarbeitbar sind, mit den Parameterwerten zu einem Dienste-Server übertragen wird, wobei der Dienst-Server von dem Rechner ermittelt worden ist, und
• bei dem der angeforderte Dienst gemäß den Parameterwerten durchgeführt wird.

8. Verfahren nach Anspruch 7,
bei dem als Markierungs-Sprache die Hypertext Markup Language und/oder die Wireless Markup Language verwendet wird/werden.

9. Verfahren nach Anspruch 7 oder 8,
bei dem als Dienst-Protokoll das Dienst-Protokoll Jini verwendet wird.

10. Verfahren nach einem der Ansprüche 7 bis 9,
bei dem die in dem Rechnernetz zur Verfügung stehenden verteilten dynamischen Dienste ermittelt werden können und mit der Dienstparameter, die jeweils einem Dienst zugeordnet sind, ermittelt werden.

11. Verfahren nach einem der Ansprüche 6 bis 9,
bei dem zum Ermitteln der Dienste in dem Rechner und/oder zum Codieren und/oder Decodieren von Nachrichten in das Dienst-Protokoll bzw. aus dem Dienst-Protokoll ein oder mehrere Java-Servlets verwendet werden.
